# EUROPÄISCHE PATENTSCHRIFT

(11) **EP 2 275 242 B1**
(45) Veröffentlichungstag und Bekanntmachung des Hinweises auf die Patenterteilung: **01.02.2017**
(21) Anmeldenummer: 10007297.4
(22) Anmeldetag: 15.07.2010
(51) Int. Cl.: B29B 13/02, B29C 35/02, B29C 51/42

(54) **Verfahren zum Aufheizen und Umformen von Termoplast-Platinen mittels Wärmeleitung**
Method for heating and forming thermoplastic boards using thermal conduction
Procédé de chauffage et de déformation de platines thermoplastiques à l'aide d'une conduite thermique

(30) Priorität: 16.07.2009 DE 102009033701
(43) Veröffentlichungstag der Anmeldung: 19.01.2011
(73) Patentinhaber: Premium AEROTEC GmbH, 86179 Augsburg (DE)
(72) Erfinder: Golling, Franz, 86179 Augsburg (DE); Ippisch, Michael, 86179 Augsburg (DE); Mayr, Christian, 86825 Bad Wörishofen (DE)
(74) Vertreter: Isarpatent

(56) Entgegenhaltungen:
- DE-A1- 2 230 895
- DE-A1- 2 614 986
- GB-A- 745 628
- JP-A- 7 060 758
- US-A- 3 386 503

## Beschreibung

### TECHNISCHES GEBIET

Die vorliegende Erfindung betrifft ein Verfahren zum Aufheizen und Umformen von Thermoplast-Platinen, insbesondere von Thermoplast-Platinen, die eine Faserverstärkung, wie beispielsweise Kohlefasern, aufweisen.

### STAND DER TECHNIK

Herkömmlicherweise werden derartige Platinen mittels Infrarotstrahlung erwärmt, um anschließend plastisch verformt zu werden. Die Erwärmung insbesondere großflächiger Platinen mittels Infrarotstrahlung kann bei ungünstigen äußeren Einflüssen inhomogen sein, so dass auf der Oberfläche der Thermoplast-Platine und somit auch in deren Material an unterschiedlichen Orten unterschiedliche Temperaturen hervorgerufen werden. Die Erwärmung der Platine mittels Infrarotstrahlung führt häufig dazu, dass das Material der Thermoplast-Platine aufquillt, wodurch auf der Oberfläche der Thermoplast-Platine Porositäten entstehen.

Versuche der Erfinder zur Erwärmung von Thermoplast-Platinen mittels Wärmeleitung in einer Heizvorrichtung, die mit der Oberfläche der Thermoplast-Platine in Kontakt gerät, haben aufgezeigt, dass dabei die Gefahr besteht, dass das erwärmte Material der Thermoplast-Platine an der Oberfläche des mit der Platine in Kontakt geratenden Teils der Heizvorrichtung anhaftet. Der sich dadurch ergebende Reinigungsaufwand für die Heizvorrichtung ist nicht unerheblich und die Oberfläche der Thermoplast-Platine wird durch dieses Verkleben unansehnlich.

Die DE 2 230 895 A beschreibt ein Verfahren zum Herstellen von Reliefteilen aus Folie durch Warmverformen. Bei diesem bekannten Verfahren wird eine Folie zunächst in eine Erhitzungsstation eingespannt und es wird nur ein Teil der Folie erwärmt. Mit diesen Folienteilen hierbei in Kontakt tretende Bereiche der Erhitzumgsstation sind mit einer Folie aus Teflon® oder Mylar® bedeckt, um zu verhindern, dass diese Bereiche der Erhitzungsstation an der Folie anhaften. Sodann wird die teilweise erhitze Folie in eine Formgebungsstation verbracht und verformt.

Aus der DE 2 614 986 A1 ist ein Verfahren zur Verformung von aus Kunststoffen geschäumten Platten bekannt, bei welchem die Platten zwischen Flächenheizkörpern erwärmt und nachfolgend einer Verformungsvorrichtung zugeführt werden. Die Flächenheizkörper sind unterhalb und oberhalb einer Transportvorrichtung für die Platten angeordnet und werden zur Erwärmung der Platten an diese herangeführt. Die Transportvorrichtung besteht aus einem unteren Transportband und einem oberen Abdeckband, welche für den Transport der Platten geeignet angetrieben werden. Die beiden Bänder bestehen jeweils aus einem temperaturbeständigen und klebstoffabweisenden Material, wodurch verhindert wird, dass die Bänder an den Platten anhaften.

Die GB 745 628 beschreibt ein Verfahren zum Herstellen von laminierten Gurten für Fördereinrichungen. Bei diesem Verfahren werden zunächst Lagen eines flexiblen Thermoplastmaterials und verstärkende Lagen eines z. B. textilen Materials zusammengesetzt und zwischen einem Paar beheizter Pressenplatten erwärmt, um nachfolgend unter Druck zwischen einem Paar von gekühlten Pressenplatten abgekühlt zu werden, so dass die einzelnen Lagen miteinander verbunden (laminiert) werden und somit der Gurt gebildet wird. Ein Transport des zu laminierenden Gebildes von einem Heizbereich zu einem Abkühlbereich einer Presseneinrichtung erfolgt mittels angetriebenen oberen und unteren Bändern aus Metall oder Kunststoff. Letztere Bänder besitzen eine Schmelztemperatur, die höher als eine in der Presseneinrichtung verwendete Temperatur ist, um ein Anhaften der Bänder an den Anpressplatten der Presseneinrichtung zu verhindern.

Auch die US 3,386,503 sowie die JP 07-060 758A offenbaren derzeitige Vorrichtungen und Verfahren.

### DARSTELLUNG DER ERFINDUNG

Aufgabe der Erfindung ist es, ein Verfahren zum Aufheizen und Umformen von Thermoplast-Platinen anzugeben, mittels welchem beim Aufheizen eine homogene Erwärmung der gesamten Thermoplast-Platine erzielbar ist, ohne dass die Oberfläche der Platine beeinträchtigt wird und an warmen Teilen der Heizvorrichtung haften bleibt, und eine material- und werkzeugschonende Umformbarkeit erzielbar ist.

Diese Aufgabe wird durch das im Patentanspruch 1 angegebene Verfahren gelöst.

Diese erfindungsgemäße Vorgehensweise sorgt für eine gleichmäßige Erwärmung der Thermoplast-Platine über ihre gesamte Flächenausdehnung, ohne dass Material der Thermoplast-Platine an einem der Flächenkontaktwerkzeuge anhaftet. Die Hilfsfolie wirkt als Trennmittel zwischen der Oberfläche der Thermoplast-Platine und der Oberfläche des Flächenkontaktwerkzeugs. Gleichzeitig wird die Oberfläche der Thermoplast-Platine durch die Hilfsfolie versiegelt, so dass die Oberfläche der erwärmten Thermoplast-Platine keinen Kontakt zur Umgebungsluft hat und so das Auftreten von Porositäten verhindert wird. Die als Trennmittel wirkende Hilfsfolie erleichtert außerdem das Herausnehmen der Thermoplast-Platine aus der Heizvorrichtung. Erfindungsgemäß wesentlich ist hierbei, dass die Schmelztemperatur der Hilfsfolie höher ist als die Schmelztemperatur der Thermoplast-Platine und so weit über der Schmelztemperatur der Thermoplast-Platine liegt, dass die Hilfsfolie zwar mit der Thermoplast-Platine verklebt, nicht aber am zugeordneten Flächenkontaktwerkzeug haften bleibt.

Vorzugsweise sind sowohl das erste Flächenkontaktwerkzeug, als auch das zweite Flächenkontaktwerkzeug beheizbar. Weiterhin zeichnet sich diese bevorzugte Weiterbildung des erfindungsgemäßen Verfahrens dadurch aus, dass eine erste Hilfsfolie zwischen die Thermoplast-Platine und das erste Flächenkontaktwerkzeug und eine zweite Hilfsfolie zwischen die Thermoplast-Platine und das zweite Flächenkontaktwerkzeug platziert ist oder wird. Hierdurch wird es ermöglicht, dass der Erwärmungsprozess der Thermoplast-Platine beschleunigt wird, da dieser die Wärme von beiden Oberflächenseiten durch Wärmeleitung zugeführt wird.

Vorzugsweise entspricht das vorgegebene Spaltmaß der Summe aus der Dicke der Thermoplast-Platine und der einen beziehungsweise der beiden Hilfsfolie(n). Hierdurch wird gewährleistet, dass die Thermoplast-Platine auch nach der Erwärmung dasselbe Dickenmaß wie vor der Erwärmung aufweist.

Nach der Erwärmung der Thermoplast-Platine mittels des Verfahrens gemäß der oben angegebenen Schritte a), b) und c) wird die Platine gemäß des erfindungsgemäßen Verfahrens unmittelbar einem Umform-Vorgang in einem Umformwerkzeug unterzogen. Die Hilfsfolie begünstigt dabei die Entformbarkeit, das heißt das Herausnehmen der umgeformten Thermoplast-Platine aus dem Umformwerkzeug. Während des Umformens begünstigt die Hilfsfolie ein Gleiten des Materials entlang der Formoberfläche des Umformwerkzeugs.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNG

Es zeigt:

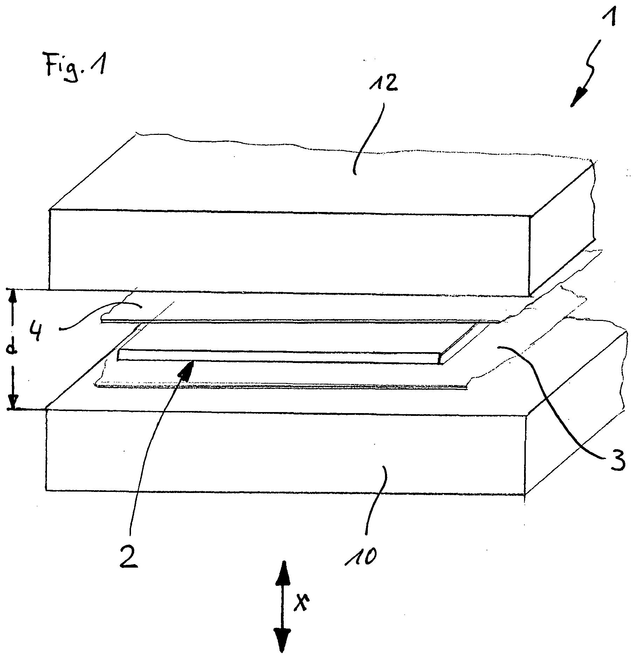

- Fig. 1: Die Anordnung einer Thermoplast-Platine in einer Heizvorrichtung bei der Durchführung des erfindungsgemäßen Verfahrens.

### DARSTELLUNG VON BEVORZUGTEN AUSFÜHRUNGSBEISPIELEN

In Fig. 1 ist eine Heizvorrichtung 1 dargestellt, die ein unteres, erstes Flächenkontaktwerkzeug 10 und ein oberes, zweites Flächenkontaktwerkzeug 12 aufweist. Beide Flächenkontaktwerkzeuge 10, 12 sind beheizbar ausgebildet. Die Flächenkontaktwerkzeuge 10, 12 sind in Richtung des Doppelpfeils X gegeneinander verschiebbar an einer entsprechenden Einrichtung der Heizvorrichtung 1 gelagert.

Auf der dem oberen Flächenkontaktwerkzeug 12 zugewandten oberen Oberfläche des unteren Flächenkontaktwerkzeugs 10 ist eine erste Hilfsfolie 3 platziert, auf die wiederum eine Thermoplast-Platine aufgelegt ist. Zwischen der Thermoplast-Platine 2 und die untere, dem ersten Flächenkontaktwerkzeug 10 zugewandte Oberfläche des zweiten Flächenkontaktwerkzeugs 12 ist eine zweite Hilfsfolie 4 angeordnet.

Nachdem die Thermoplast-Platine 2 und die beiden Hilfsfolien 3, 4 in dieser Weise zwischen die beiden Flächenkontaktwerkzeuge 10, 12 gebracht worden sind, werden die beiden Flächenkontaktwerkzeuge 10, 12 aufeinander zu verfahren, wodurch sich der Abstand d zwischen den einander gegenübergelegenen Oberflächen der Flächenkontaktwerkzeuge 10, 12 auf ein vorgegebenes Spaltmaß verringert. Dieses Spaltmaß ist so gewählt, dass die Thermoplast-Platine 2 und die beiden Hilfsfolien 3, 4 zwischen den Flächenkontaktwerkzeugen 10, 12 unter gegenseitiger Oberflächenberührung eingespannt sind.

Anschließend werden die beiden Flächenkontaktwerkzeuge 10, 12 beheizt, wodurch die Thermoplast-Platine 2 und die Hilfsfolien 3, 4 erwärmt werden. Dabei wird soviel Wärme auf die Thermoplast-Platine 2 übertragen, dass die Thermoplast-Platine 2 so weich wird, dass sie in einem anschließenden Bearbeitungsschritt plastisch verformt werden kann.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Heizvorrichtung
- 2: Thermoplast-Platine
- 3: Hilfsfolie
- 4: Hilfsfolie
- 10: Flächenkontaktwerkzeug
- 12: Flächenkontaktwerkzeug

- d: Abstand

## Patentansprüche

1. Verfahren zum Aufheizen und Umformen von Thermoplast-Platinen (2), wobei das Aufheizen mittels Wärmeleitung in einer zumindest ein erstes Flächenkontaktwerkzeug (10) und ein von diesem beabstandetes zweites Flächenkontaktwerkzeug (12) aufweisenden Heizvorrichtung (1) erfolgt, wobei das erste Flächenkontaktwerkzeug (10) und/oder das zweite Flächenkontaktwerkzeug (12) beheizbar sind, mit den Schritten:
a) Einlegen der Thermoplast-Platine (2) in die Heizvorrichtung (1) zwischen die beiden Flächenkontaktwerkzeuge (10, 12), wobei zwischen die Kontaktoberfläche des jeweiligen beheizbaren Flächenkontaktwerkzeugs (10, 12) und die dieser zugewandte Oberfläche der Thermoplast-Platine (2) eine Hilfsfolie (3, 4) platziert ist oder wird;
b) Verringern des Abstandes (d) zwischen den beiden Flächenkontaktwerkzeugen (10, 12) auf ein vorgegebenes Spaltmaß;
c) Beheizen des beheizbaren Flächenkontaktwerkzeugs beziehungsweise der beheizbaren Flächenkontaktwerkzeuge, wobei die Schmelztemperatur der Hilfsfolie (3, 4) höher ist als die Schmelztemperatur der Thermoplast-Platine (2) und so weit über der Schmelztemperatur der Thermoplast-Platine (2) liegt, dass die Hilfsfolie (3, 4) zwar mit der Thermoplast-Platine (2) verklebt, nicht aber am zugeordneten Flächenkontaktwerkzeug (10, 12) haften bleibt; und
d) unmittelbar nach Erwärmung der Thermoplast-Platine (2) mittels der Schritte a), b) und c), Unterziehen der Thermoplast-Platine (2) einem Umform-Vorgang in einem Umformwerkzeug,
wobei während des Umformens eine plastische Verformung der Thermoplast-Platine (2) erfolgt und die Hilfsfolie (3, 4) hierbei ein Gleiten des umzuformenden Materials entlang einer Formoberfläche des Umformwerkzeugs begünstigt.

2. Verfahren nach Anspruch 1,
**dadurch gekennzeichnet,**
**dass** sowohl das erste Flächenkontaktwerkzeug (10), als auch das zweite Flächenkontaktwerkzeug (12) beheizbar sind und dass eine erste Hilfsfolie (3) zwischen die Thermoplast-Platine (2) und das erste Flächenkontaktwerkzeug (10) und eine zweite Hilfsfolie (4) zwischen die Thermoplast-Platine (2) und das zweite Flächenkontaktwerkzeug (12) platziert ist oder wird.

3. Verfahren nach Anspruch 1 oder 2,
**dadurch gekennzeichnet,**
**dass** das vorgegebene Spaltmaß der Summe aus der Dicke der Thermoplast-Platine (2) und der einen beziehungsweise der beiden Hilfsfolie(n) (3, 4) entspricht.

## Claims

1. Method for heating and shaping thermoplastic plates (2), wherein said thermoplastic plates are heated by means of thermal conduction in a heating apparatus (1) that comprises a first surface contacting tool (10) and a second surface contacting tool (12) that is spaced from said first surface contacting tool, wherein the first surface contacting tool (10) and/or the second surface contacting tool (12) can be heated, said method having the steps:
a) placing the thermoplastic plate (2) into the heating device (1) between the two surface contacting tools (10, 12), wherein an auxiliary sheet (3, 4) is placed or is to be placed between the contacting surface of the respective heatable surface contacting tool (10, 12) and the surface of the thermoplastic plate (2) that is facing said respective heatable surface contacting tool,
b) reducing the spacing (d) between the two surface contacting tools (10, 12) to a predetermined gap size,
c) heating the heatable surface contacting tool or the heatable surface contacting tools, wherein the melting temperature of the auxiliary sheet (3, 4) is higher than the melting temperature of the thermoplastic plate (2), said melting temperature of the auxiliary sheet being higher than the melting temperature of the thermoplastic plate (2) to the extent that the auxiliary sheet (3, 4) adheres to the thermoplastic plate (2) but does not remain adhered to the allocated surface contacting tool (10, 12), and
d) subjecting the thermoplastic plate (2) to a shaping procedure in a shaping tool immediately after heating the thermoplastic plate (2) by means of steps a), b) and c), wherein during the shaping procedure, the thermoplastic plate (2) deforms in a plastic manner and the auxiliary sheet (3, 4) facilitates the material that is to be shaped sliding along a forming surface of the shaping tool.

2. Method according to Claim 1,
**characterized in that**
both the first surface contacting tool (10) as well as the second surface contacting tool (12) can be heated and that a first auxiliary sheet (3) is placed or is to be placed between the thermoplastic plate (2) and the first surface contacting tool (10) and a second auxiliary sheet (4) is placed or is to be placed between the thermoplastic plate (2) and the second surface contacting tool (12).

3. Method according to Claim 1 or 2,
**characterized in that**
the predetermined gap size corresponds to the sum of the thickness of thermoplastic plate (2) and the one or the two auxiliary sheet(s) (3, 4).

## Revendications

1. Procédé d'échauffement et de formage de panneaux thermoplastiques (2), dans lequel l'échauffement est réalisé au moyen de conduction thermique dans un dispositif de chauffage (1) présentant au moins un premier outil de contact de surface (10) et un deuxième outil de surface de contact (12) distancé de celui-ci, dans lequel le premier outil de contact de surface (10) et/ou le deuxième outil de contact de surface (12) peuvent être échauffés, comprenant les étapes de :
a) insérer le panneau thermoplastique (2) dans le dispositif de chauffage (1) entre les deux outils de contact de surface (10, 12), dans lequel un film auxiliaire (3, 4) se trouve placé ou est placé entre la surface de contact de l'outil respectif de contact de surface (10, 12) pouvant être échauffé et la surface, tournée vers celle-ci, du panneau thermoplastique (2) ;
b) diminuer l'écart (d) entre les deux outils de contact de surface (10, 12) à une dimension d'écartement prédéfinie ;
c) échauffer l'outil de contact de surface pouvant être échauffé, respectivement des outils de contact de surface pouvant être échauffés, dans lequel procédé la température de fusion du film auxiliaire (3, 4) est plus élevée que la température de fusion du panneau thermoplastique (2) et est tellement plus élevée que la température de fusion du panneau thermoplastique (2) que le film auxiliaire (3, 4) colle certes au panneau thermoplastique (2) mais ne reste pas en adhérence avec l'outil de contact de surface (10, 12) associé ; et,
d) directement après l'échauffement du panneau thermoplastique (2) au moyen des étapes a), b) et c), soumettre le panneau thermoplastique (2) à une opération de formage dans un outil de formage,
dans lequel une déformation plastique du panneau thermoplastique (2) a lieu pendant le formage et dans lequel le film auxiliaire (3, 4) favorise en même temps un glissement du matériau à former le long d'une surface de formage de l'outil de formage.

2. Procédé selon la revendication 1, **caractérisé en ce qu'**aussi bien le premier outil de contact de surface (10) que le deuxième outil de contact de surface (12) peuvent être échauffés et **en ce qu'**un premier film auxiliaire (3) se trouve placé ou est placé entre le panneau thermoplastique (2) et le premier outil de contact de surface (10) et **en ce qu'**un deuxième film auxiliaire (4) se trouve placé ou est placé entre le panneau thermoplastique (2) et le deuxième outil de contact de surface (12).

3. Procédé selon la revendication 1 ou 2, **caractérisé en ce que** la dimension d'écartement prédéfinie correspond à la somme résultant de l'épaisseur du panneau thermoplastique (2) et d'un film auxiliaire, respectivement des deux films auxiliaires (3, 4).
